# EUROPÄISCHE PATENTSCHRIFT

(11) **EP 4 608 687 B1**
(45) Veröffentlichungstag und Bekanntmachung des Hinweises auf die Patenterteilung: **09.12.2026**
(21) Anmeldenummer: 23793318.9
(22) Anmeldetag: 18.10.2023
(51) Int. Cl.: B60S 13/00

(54) **RANGIERHEBER**
MANEUVERING LIFTING DEVICE
DISPOSITIF DE LEVAGE ET DE MANOEUVRE

(30) Priorität: 28.10.2022 DE 102022211486
(43) Veröffentlichungstag der Anmeldung: 03.09.2025
(73) Patentinhaber: Robert Bosch GmbH, 70442 Stuttgart (DE)
(72) Erfinder: RIEDEL, Uwe, 76337 Waldbronn (DE)
(86) Internationale Anmeldenummer: PCT/EP2023/078939
(87) Internationale Veröffentlichungsnummer: WO 2024/088843

(56) Entgegenhaltungen:
- WO-A1-2021/008905
- CN-A- 107 444 362
- GB-A- 2 528 987
- US-A1- 2020 180 572
- US-A1- 2022 307 281
- US-B2- 11 332 352

## Beschreibung

Die Erfindung betrifft einen Rangierheber zum Aufnehmen und Anheben eines Rades eines Fahrzeugs, insbesondere eines Kraftfahrzeugs, im Werkstattbereich. Die Erfindung betrifft auch ein Verfahren zum Transportieren eines Kraftfahrzeugs mit erfindungsgemäßen Rangierhebern.

### Stand der Technik

Es sind mechanische Rangierhilfen bekannt, die es ermöglichen, Kraftfahrzeuge in Werkstattbereich manuell, d.h. mit Muskelkraft, zu bewegen. Solche Rangierhilfen können mit manuell betätigten hydraulischen Hubvorrichtungen ausgebildet sein, die es ermöglichen, ein Kraftfahrzeug, das auf der Rangierhilfe angeordnet ist, einige Zentimeter anzuheben, sodass die Räder des Kraftfahrzeugs den Kontakt zum Boden verlieren und das Kraftfahrzeug beliebig über den Boden bewegt werden kann.

Im Dokument US 11,332,352 B2 ist ein autonomes Liftsystem offenbart, bei dem zur Ermöglichung einer omnidirektionalen Bewegung ein Universalball als passives Stützelement zum Einsatz kommt.

Im Dokument US 2022/0307281 A1 wird ein System zur Handhabung von Fahrzeugen beschrieben, bei dem eine zentrale Steuervorrichtung einen Bewegungspfad ermittelt und entsprechende Steuerbefehle an mehrere, unter die Fahrzeugräder bewegte Handhabungsroboter übermittelt.

### Offenbarung der Erfindung

Es ist eine Aufgabe der Erfindung, eine Rangierhilfe für Kraftfahrzeuge bereitzustellen, die das Bewegen von Kraftfahrzeugen auf einem Boden vereinfacht.

Ein erfindungsgemäßer Rangierheber zur Aufnahme eines Rades eines Fahrzeugs, insbesondere eines Kraftfahrzeugs, hat einen Grundträger mit Rollelementen, die den Grundträger beweglich auf einem Boden abzustützen; ein auf dem Grundträger angeordnetes Hubelement, das zur Aufnahme eines Rades vorgesehen ist; und wenigstens eine Hubvorrichtung, die dazu ausgebildet ist, das Hubelement wahlweise aufwärts und abwärts zu bewegen, um die Höhe des Hubelements gegenüber dem Grundträger zu variieren.

Ein erfindungsgemäßer Rangierheber hat auch wenigstens eine Antriebsvorrichtung, die dazu ausgebildet ist, wenigstens eines der Rollelemente anzutreiben, um den Rangierheber auf dem Boden zu bewegen.

Die Antriebsvorrichtung eines erfindungsgemäßen Rangierhebers vereinfacht das Bewegen des Rangierhebers auf dem Boden. Kraftfahrzeuge können daher mithilfe einer erfindungsgemäßen Rangierhebers einfach und bequem über den Boden manövriert werden.

Gemäß der Erfindung sind die Rollelemente als Kugeln ausgebildet, die jeweils um eine beliebig im Raum ausgerichtete Achse rotierbar sind. In der Folge ist der Rangierheber in einer beliebigen Richtung über den Boden bewegbar und auch auf der Stelle rotierbar.

Gemäß der Erfindung umfasst die Antriebsvorrichtung einen ersten Antriebsmechanismus und einen zweiten Antriebsmechanismus. Der erste Antriebsmechanismus ist dazu ausgebildet, die Kugel um eine erste Achse zu drehen, und der zweiten Antriebsmechanismus ist dazu ausgebildet, die Kugel um eine zweite Achse zu drehen. Dabei ist die zweite Achse quer, insbesondere orthogonal, zur zweiten Achse ausgerichtet.

Jeder Antriebsmechanismus kann jeweils ein Reibelement, beispielsweise eine Reibscheibe aufweisen, das dazu ausgebildet ist, die Kugel durch Reibung zwischen der Kugel und dem Reibelement anzutreiben, wenn das Reibelement rotiert wird. Eine solche Antriebsvorrichtung ermöglicht es, die Kugel gezielt um eine Achse zu rotieren, die beliebig im Raum ausgerichtet ist. Insbesondere kann die Ausrichtung der Rotationsachse der Kugel im Raum durch Variieren der Drehzahlen der beiden Reibelemente verändert werden.

In einer Ausführungsform ist das Hubelement dazu ausgebildet, das Rad des Kraftfahrzeugs so abzustützen, dass das Rad um seine Drehachse drehbar ist. Das Hubelement kann insbesondere Rollen aufweisen, die das Rad des Kraftfahrzeugs so abstützen, dass das Rad um seine Drehachse drehbar ist. Ein derart ausgebildetes Hubelement ermöglicht es, ein auf dem Hubelement abgestütztes Rad zur Diagnose und/oder zum Einstellen von Fahrzeugparametern um seine Drehachse zu drehen.

In einer Ausführungsform weist der Rangierheber wenigstens einen Reifensensor auf, der dazu ausgebildet ist, einen Zustand eines Rades, das auf dem Hubelement abgestützt ist, zu erfassen.

Ein solcher Reifensensor kann beispielsweise ein optischer Reifensensor sein, der es ermöglicht, ein Rad, das auf dem Hubelement angeordnet ist, optisch auf Beschädigungen zu überprüfen und/oder die Reifenprofiltiefe bzw. das Abnutzungsprofils des Rades/Reifens zu erkennen und zu überprüfen. Ein optischer Reifensensor kann als 2D-Kamera oder als 3D-Kamera ausgebildet sein.

Ein optischer Reifensensor kann dazu ausgebildet sein, Licht im sichtbaren Bereich, Infrarotlicht und/oder UV-Licht zu detektieren.

Der Reifensensor kann auch eine Beleuchtungsvorrichtung mit einer Lichtquelle umfassen, die dazu ausgebildet ist, die Bereiche des Rades, die von dem optischen Reifensensor erfasst werden, mit Licht, insbesondere mit Licht im sichtbaren Bereich, mit Infrarotlicht und/oder mit UV-Licht, zu beleuchten, um die Qualität der von dem Reifensensor zur Verfügung gestellten Messergebnisse zu verbessern.

Ein an dem Rangierheber vorgesehener Reifensensor kann auch als Luftdrucksensor ausgebildet sein, der es ermöglicht, einen im Rad vorhandenen Reifendruckkontrollsensor, beispielsweise über eine drahtlose Bluetooth- oder NFC-Kommunikation, auszulesen, um den Luftdruck im Reifen des Rades zu überprüfen.

In einer Ausführungsform umfasst der Rangierheber wenigstens ein Breitenausgleichselement, das es ermöglicht, die Breite des Rangierhebers zu verändern. Das Breitenausgleichselement kann beispielsweise als teleskopische Element ausgebildet sein, das eine veränderbare Abmessung aufweist.

Mithilfe eines Breitenausgleichselements kann der Rangierheber an Reifen angepasst werden, die unterschiedliche Dimensionen haben. Dadurch kann der Rangierheber in Verbindung mit einer Vielzahl unterschiedlicher Reifentypen und Reifengrößen zum Einsatz kommen.

In einer Ausführungsform ist der Rangierheber mit einer Aufnahme bzw. Kupplung ausgebildet, die es ermöglicht, den Rangierheber mit einer externen Vorrichtung, z.B. mit einer Hubvorrichtung/Hebebühne zu koppeln, um den Rangierheber und ein auf dem Rangierheber angeordnetes Kraftfahrzeug anzuheben.

In einer Ausführungsform weist der Rangierheber eine Steuervorrichtung auf, die dazu ausgebildet ist, die wenigstens eine Antriebsvorrichtung anzusteuern, um den Rangierheber über den Boden zu bewegen.

Mithilfe einer solchen Steuervorrichtung kann der Rangierheber automatisiert über den Boden einer Werkstatt bewegt werden. Das Manövrieren von Kraftfahrzeugen mithilfe erfindungsgemäßer Rangierheber kann dadurch noch weiter vereinfacht werden. Insbesondere können die Bewegungen mehrere Rangierheber, die unter den Rädern eines Kraftfahrzeugs angeordnet sind, miteinander koordiniert werden, um das Kraftfahrzeug durch das gemeinsame Bewegen der Rangierheber über den Boden der Werkstatt zu manövrieren.

In einer Ausführungsform weist der Rangierheber eine Navigationsvorrichtung auf, die es ermöglicht, die aktuelle Position des Rangierhebers auf dem Boden zu bestimmen. Die Navigationsvorrichtung kann insbesondere dazu ausgebildet sein, die aktuelle Position des Rangierhebers an einem Arbeits- und/oder Lagerplatz zu bestimmen. Auf diese Weise können die Bewegungen des Rangierhebers automatisiert werden. Die Benutzung des Rangierhebers kann so noch weiter vereinfacht werden.

In einer Ausführungsform weist der Rangierheber eine Kommunikationsvorrichtung auf, die dazu ausgebildet ist, mit der Kommunikationsvorrichtung wenigstens eines anderen Rangierhebers und/oder mit der Kommunikationsvorrichtung einer externen Steuerung zu kommunizieren. Die Kommunikation kann insbesondere drahtlos, beispielsweise über WLAN, Bluetooth^{®}, ein Mobilfunknetz, satellitengestütztes Kommunikationsnetz oder mithilfe von Infrarotlicht erfolgen. Zur Kommunikation über ein Mobilfunknetz kann in der Kommunikationsvorrichtung ein SIM-Karte vorgesehen sein.

Mithilfe einer Kommunikationsvorrichtung kann der Rangierheber von außen angesteuert werden. Eine Kommunikationsvorrichtung ermöglicht es auch, dass mehrere Rangierheber miteinander kommunizieren, um ihre Bewegungen zu koordinieren. Insbesondere können die Bewegungen mehrerer Rangierheber so koordiniert werden, dass die Rangierheber gemeinsam alle Räder eines Kraftfahrzeugs aufnehmen und das Kraftfahrzeug in miteinander koordinierten Bewegungen zu einer vorgegebenen Position transportieren.

Die Erfindung umfasst auch einen Satz von mehreren erfindungsgemäßen Rangierhebern, insbesondere einen Satz von vier Rangierhebern, wobei die Rangierheber des Satzes von Rangierhebern dazu ausgebildet sind, miteinander zu kommunizieren, um ihre Bewegungen miteinander zu koordinieren.

Die Erfindung umfasst auch einen Nutzungsbereich, z.B. einen Werkstatt-, Arbeits- und/oder Lagerplatz oder ein größeres Gelände, z.B. ein Firmengelände, mit einem Boden und einer Kommunikationsvorrichtung, die dazu ausgebildet ist, mit wenigstens einem erfindungsgemäßen Rangierheber zu kommunizieren. Die Kommunikationsvorrichtung kann insbesondere zur drahtlosen Kommunikation, beispielsweise über WLAN, Bluetooth^{®}, ein Mobilfunknetz, satellitengestütztes Netz zur Kommunikation und/oder Positionsbestimmung und/oder Infrarotlicht, ausgebildet sein. Zur Kommunikation über ein Mobilfunknetz kann in der Kommunikationsvorrichtung ein SIM-Karte vorgesehen sein.

Im Nutzungsbereich des Rangierhebers können zusätzlich Positionssensoren, beispielsweise optische Positionssensoren, vorgesehen sein, die es ermöglicht, die aktuelle Position des wenigstens einen Rangierhebers im Nutzungsbereich zu bestimmen und einer Steuervorrichtung mitzuteilen. Die Steuervorrichtung kann auf wenigstens einem der Rangierheber oder als externe Steuerung vorgesehen sein.

Die Erfindung umfasst auch ein Verfahren zum Transportieren eines Kraftfahrzeugs mit einem Satz erfindungsgemäßer Rangierheber. Das Verfahren umfasst insbesondere, die Rangierheber so anzusteuern, dass jeder der Rangierheber zu einem der Räder des Kraftfahrzeugs fährt, das jeweilige Rad des Kraftfahrzeugs aufnimmt und anhebt und die Rangierheber das angehobene Fahrzeug koordiniert zu einem vorgegebenen Ziel transportieren.

In einem beispielhaft beschriebenen Anwendungsfall wird ein Kraftfahrzeug von einem Fahrer in einer zuvor definierten Abstellzone abgestellt.

Eine kamerabasierte Überwachung der Abstellzone erkennt, dass das Kraftfahrzeug dort abgestellt worden ist, und sendet einen Befehl zum Abholen des Kraftfahrzeugs an vier erfindungsgemäß ausgebildete Rangierheber.

Die Rangierheber fahren daraufhin selbstständig zu dem abgestellten Kraftfahrzeug, erkennen das jeweilige Rad bzw. ihren Einsatzort am Kraftfahrzeug und heben dieses mithilfe ihrer Hubelemente und Hubvorrichtungen an. Anschließend transportieren die Rangierheber durch koordinierte Bewegungen das Fahrzeug zu einem vorgegebenen Ort, an dem das Fahrzeug gelagert werden kann und/oder an dem weiterführende Services am Fahrzeug erbracht werden können.

Diese Services können beispielsweise das Laden der Batterie des Kraftfahrzeugs, das Durchführen einer Fahrzeugwäsche, das Erkennen von Beschädigungen an der Außenseite des Fahrzeugs, z.B. mithilfe eines kamerabasierten Bilderkennungssystems, und/oder das Verbringen des Kraftfahrzeugs in den Reparaturbereich in einer Werkstatt bzw. die Zwischenlagerung vor und nach der Erbringung der zuvor genannten Services umfassen.

Im Folgenden wird ein Ausführungsbeispiel eines erfindungsgemäßen Rangierhebers anhand der beigefügten Figuren beschrieben.

### Kurze Beschreibung der Figuren

Figur 1 zeigt eine schematische Draufsicht auf einen Nutzungsbereich mit einem Kraftfahrzeug und vier Rangierhebern.
Figur 2 zeigt eine schematische Draufsicht auf einen erfindungsgemäßen Rangierheber.
Figur 3 zeigt eine schematische Seitenansicht eines erfindungsgemäßen Rangierhebers.
Figur 4 zeigt eine schematische Rückansicht eines erfindungsgemäßen Rangierhebers.
Figur 5 zeigt in einer schematischen Ansicht einer Antriebsvorrichtung zum Antreiben eines erfindungsgemäßen Rangierhebers.

### Figurenbeschreibung

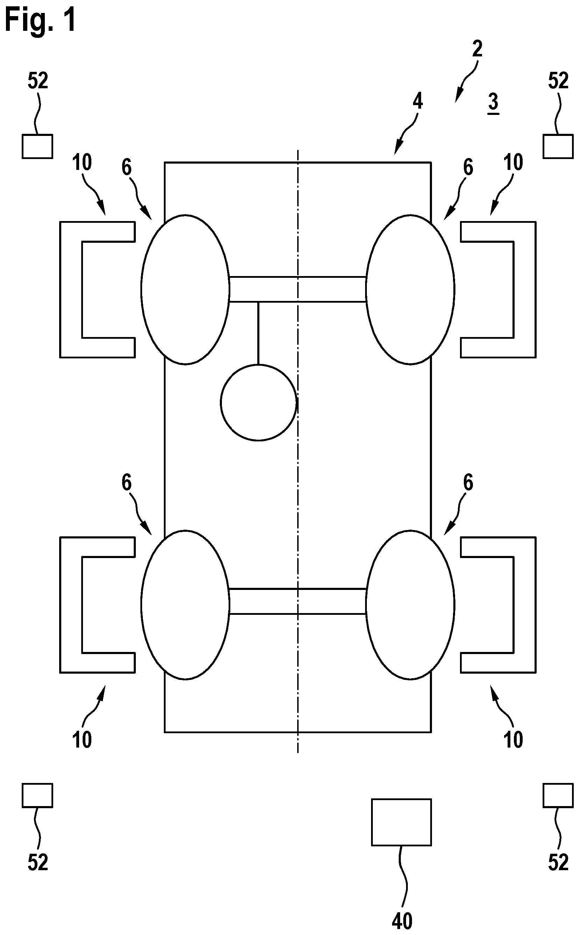

Figur 1 zeigt eine schematische Draufsicht auf einen Nutzungsbereich 2 mit einem Kraftfahrzeug 4 mit vier Rädern 6 und vier Rangierhebern 10, die neben den vier Rädern 6 des Kraftfahrzeugs 4 angeordnet sind. Der Nutzungsbereich 2 kann beispielsweise ein Werkstattplatz, ein Arbeitsplatz oder ein Lagerplatz für Kraftfahrzeuge 5 sein. Der Nutzungsbereich 2 kann auch ein größeres Gelände sein, das insbesondere mehrere Werkstattplätze, Arbeitsplätze und/oder Lagerplätze umfassen kann.

Rangierheber 10 sind technische Vorrichtungen, die dazu ausgebildet sind, jeweils ein Rad 4 des Kraftfahrzeugs 4 zu greifen und anzuheben. Mit vier Rangierhebern 10 kann das Kraftfahrzeug 4 vollständig vom Boden 3 des Nutzungsbereichs 2 angehoben und anschließend frei im Nutzungsbereich 2 bewegt werden.

Im Nutzungsbereich können zusätzlich Positionssensoren 52, beispielsweise optische Positionssensoren 52, vorgesehen sein, die es ermöglicht, die aktuelle Positionen der Rangierheber 10 zu erkennen und einer Steuervorrichtung 40 mitzuteilen.

Alternativ oder zusätzlich können die aktuelle Positionen der Rangierheber 10 über in den Rangierhebern 10 installierte GPS-Sensoren und/oder optische Sensoren, z.B. Kameras, bestimmt werden.

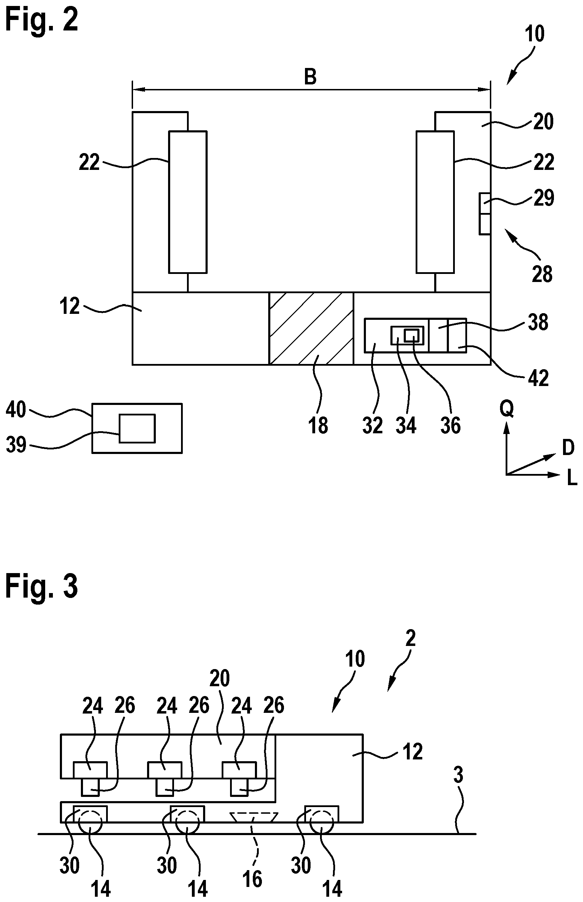

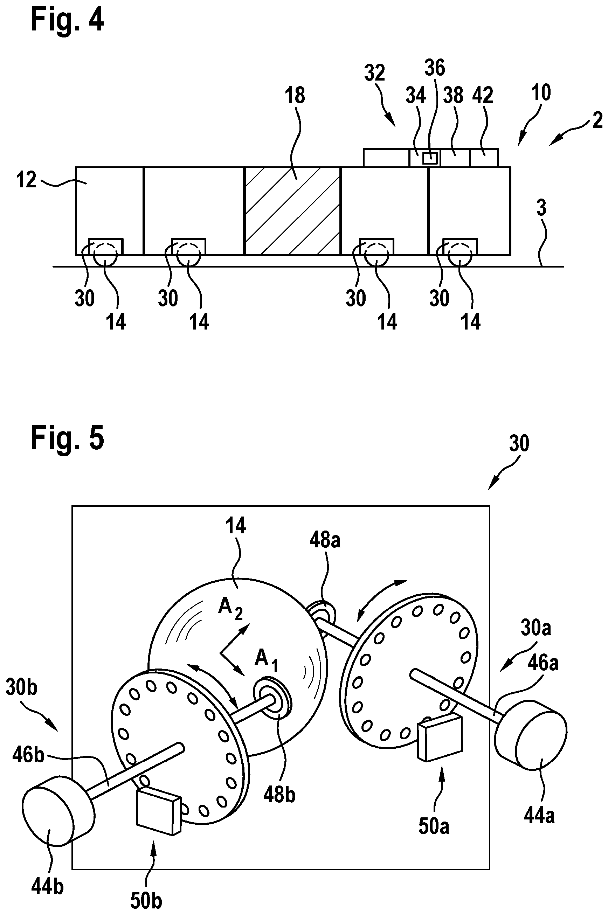

Figur 2 zeigt eine schematische Draufsicht auf einen Rangierheber 10, der gemäß einem Ausführungsbeispiel der Erfindung ausgebildet ist. Figur 3 zeigt eine schematische Seitenansicht, und Figur 4 zeigt eine schematische Rückansicht des in der Figur 2 gezeigten Rangierhebers 10.

Der Rangierheber 10 hat einen Grundträger 12, der mit mehreren Rollelementen 14 ausgestattet ist, die den Grundträger 12 beweglich auf dem Boden 3 des Nutzungsbereichs 2 abstützen.

Die Rollelemente 14 können insbesondere Kugeln 14 sein, die es ermöglichen, den Rangierheber 10 in alle Richtungen, d.h. in einer Längsrichtung L, in einer Querrichtung Q und in beliebige diagonale Richtungen D, auf dem Boden 3 zu bewegen. Als Kugeln 14 ausgebildete Rollelemente 14 ermöglichen es auch, den Rangierheber 10 auf der Stelle zu drehen.

Der Rangierheber 10 kann mit einer Aufnahme bzw. Kupplung 16 ausgebildet sein, die es ermöglicht, den Rangierheber 10 z.B. mit einer (nicht gezeigten) Hebebühne zu koppeln, um den Rangierheber 10 und ein auf dem Rangierheber 10 angeordnetes Kraftfahrzeug 4 anzuheben.

Der Rangierheber 10 kann auch mit wenigstens einem Breitenausgleichselement 18 ausgestattet sein, das es ermöglicht, die Breite B des Rangierhebers 10 zu verändern. Auf diese Weise kann der Rangierheber 10 an unterschiedlich dimensionierte Räder 6 des Kraftfahrzeugs 4 angepasst werden. Das Breitenausgleichselement 18 kann beispielsweise teleskopartig ausgebildet sein.

Der Rangierheber 10 hat ein auf oder an dem Grundträger 12 angeordnetes Hubelement 20, das zur Aufnahme eines Rades 6 des Kraftfahrzeugs 4 vorgesehen ist.

Auf dem Hubelement 20 sind Rollen 22 vorhanden, die es einem auf dem Hubelement 20 angeordneten Rad 6 ermöglichen, sich um seine Achse zu drehen.

Der Rangierheber 10 hat auch wenigstens eine Hubvorrichtung 24, die er ermöglicht, die Höhe des Hubelements 20 gegenüber dem Grundträger 12 zu variieren, um ein auf dem Hubelement 20 angeordnetes Rad 6 und damit auch das Kraftfahrzeug 4, an dem das Rad 6 angebracht ist, wahlweise anzuheben und abzusenken.

In dem gezeigten Ausführungsbeispiel umfasst die Hubvorrichtung 24 mehrere Hubzylinder 26, die hydraulisch ein- und ausfahrbar sind, um die Höhe des Hubelements 20 gegenüber dem Grundträger 12 zu variieren.

Anstelle von Hubzylindern 26 können auch andere Mechanismen zum Antreiben des Hubelements 20, z.B. Zahnstangen- und Schneckenantriebe, vorgesehen sein.

An dem Hubelement 20 können ein oder mehrere Radsensoren 28 vorgesehen sein, die es ermöglichen, den Zustand eines auf dem Hubelement angeordneten Rades 6 zu überprüfen.

Die Radsensoren 28 können beispielsweise optischen Radsensoren 28 (Kameras) umfassen, die es ermöglichen, das Rad 6 optisch auf Beschädigungen zu überprüfen und/oder die Reifenprofiltiefe bzw. das Abnutzungsprofils des Reifens des Rades 6 zu erkennen. Die optischen Radsensoren 28 können dazu ausgebildet sein, Licht im sichtbaren Bereich, Infrarotlicht und/oder UV-Licht zu detektieren. Die Radsensoren 28 können auch eine oder mehrere Beleuchtungsvorrichtungen 29 umfassen, die dazu ausgebildet sind, die Bereiche des Rades 6, die von den optischen Radsensoren 28 erfasst werden, mit Licht im sichtbaren Bereich, mit Infrarotlicht und/oder mit UV-Licht zu beleuchten.

Es können auch Radsensoren 28 vorgesehen sein, die es ermöglichen, einen im Rad 6 vorhandenen Reifendruckkontrollsensor, z.B. über Bluetooth oder NFC-Kommunikation, auszulesen, um den Luftdruck im Reifen des Rades 6 zu bestimmen.

An den Rollelementen 14 sind Antriebsvorrichtungen 30 vorgesehen, die dazu ausgebildet ist, das jeweilige Rollelement 14 anzutreiben, um den Rangierheber 10 auf dem Boden 3 zu bewegen.

An jedem der Rollelemente 14 kann eine Antriebsvorrichtung 30 vorgesehen sein.

In alternativen Ausführungsbeispielen kann nur an ausgewählten Rollelementen 14 jeweils eine Antriebsvorrichtung 30 vorgesehen sein, um die Kosten des Rangierhebers 10 zu reduzieren.

Der Rangierheber 10 hat auch eine Steuervorrichtung 32, die dazu ausgebildet ist, die Antriebsvorrichtung(en) 30 anzusteuern, um den Rangierheber 10 kontrolliert über den Boden 3 zu bewegen.

Die Steuervorrichtung 32 umfasst insbesondere eine Navigationsvorrichtung 34, die es ermöglicht, die aktuelle Position des Rangierhebers 10 auf dem Boden 3 zu bestimmen.

Die Navigationsvorrichtung 34 kann einen oder mehrere Umgebungssensoren 36 umfassen, um die Umgebung des Rangierhebers 10 zu erfassen und so die aktuelle Position des Rangierhebers 10 auf dem Boden 3, beispielsweise in Bezug auf ein Kraftfahrzeug 4, zu bestimmen.

Der Rangierheber 10 weist darüber hinaus eine Kommunikationsvorrichtung 38 auf, die dazu ausgebildet ist, mit einer korrespondierenden Kommunikationsvorrichtung 38 wenigstens eines anderen Rangierhebers 10 und/oder mit einer Kommunikationsvorrichtung 39 einer externen Steuerung 40, zu kommunizieren. Dies ermöglicht es, die Bewegung des Rangierhebers 10 mit der externen Steuerung 40 anzusteuern. Es ermöglicht insbesondere, die Aktivitäten von mehreren Rangierhebern 10, die sich im Nutzungsbereich 2 befinden, zu koordinieren.

Die Kommunikationsvorrichtungen 38, 39 können insbesondere zur drahtlosen Kommunikation, beispielsweise mithilfe von WLAN, Bluetooth^{®}, Infrarotlicht oder einer ähnlichen Technologie, ausgebildet sein, sodass auf Kabelverbindungen, welche die Bewegung des Rangierhebers 10 einschränken und behindern könnten, verzichtet werden kann.

Die Kommunikationsvorrichtungen 38, 39 können auch dazu ausgebildet sein, von den Radsensoren 28 erfasste Daten an die externe Steuerung 40 oder an eine andere externe Empfangsvorrichtung zu übertragen, um zu ermöglichen, die Messergebnisse der Radsensoren 28 extern zu begutachten, auszuwerten und ggf. zu protokollieren.

Der Rangierheber 10 hat auch eine elektrische Energiequelle 42, insbesondere eine wiederaufladbare elektrische Batterie ("Akkumulator"), um die Hubvorrichtung 24, die Radsensoren 28, die Antriebsvorrichtung 30, die Steuervorrichtung 32, die Navigationsvorrichtung 34 und die Kommunikationsvorrichtung 38 mit elektrischer Energie zu versorgen. Ein Rangierheber 10, der mit einer elektrischen Energiequelle 4 ausgestattet ist, kann betrieben werden, ohne dass eine elektrische Kabelverbindung zu einer externen Energiequelle vorhanden ist.

Die elektrische Energiequelle 42 kann beispielsweise über eine lösbare Kabelverbindung oder drahtlos über eine induktives Ladesystem aufgeladen werden.

Figur 5 zeigt in einer schematischen Darstellung ein Ausführungsbeispiel für eine Antriebsvorrichtung 30 zum Antreiben eines Rollelements 14, das als Kugel 14 ausgebildet ist.

Die Antriebsvorrichtung 30 umfasst einen ersten Antriebsmechanismus 30a, der dazu ausgebildet ist, eine Kugel 14 um eine erste Achse A₁ zu drehen, und einen zweiten Antriebsmechanismus 30b, der dazu ausgebildet ist, die Kugel 14 um eine zweite Achse A₂ zu drehen. Die zweite Achse A₂ ist quer, insbesondere orthogonal, zur ersten Achse A₁ ausgerichtet.

In dem in der Figur 5 gezeigten Ausführungsbeispiel sind die beiden Antriebsmechanismen 30a, 30b baugleich. Jeder der beiden Antriebsmechanismen 30a, 30b hat jeweils einen elektrischen Antriebsmotor 44a, 44b der über eine Antriebsachse 46a, 46b jeweils mit einem Reibelement 48a, 48b, insbesondere einer Reibscheibe 48a, 48b, verbunden ist, sodass das Reibelement 48a, 48b durch Betreiben des Antriebsmotors 44a, 44b rotierbar ist.

Eine Außenumfangsfläche jedes der beiden Reibelemente 48a, 48b ist im Kontakt mit der Oberfläche der Kugel 14. Die Außenumfangsflächen der beiden Reibelemente 48a, 48b und die Oberfläche der Kugel 14 sind so ausgebildet, dass die Kugel 14 aufgrund der Reibung zwischen der jeweiligen Außenumfangsfläche eines der beiden Reibelemente 48a, 48b und der Oberfläche der Kugel 14 gedreht wird, wenn das jeweilige Reibelement 48a, 48b um seine Achse A₁, A₂ rotiert.

Durch gezieltes Ansteuern der beiden Antriebsmotoren 44a, 44b, sodass die beiden Reibelemente 48a, 48b mit der gleichen Drehzahl oder mit unterschiedlichen Drehzahlen rotieren, kann eine Rotation der Kugel 14 um eine Kugeldrehachse bewirkt werden, die beliebig im Raum orientiert sein kann. Insbesondere kann die räumliche Ausrichtung der Kugeldrehachse durch Verändern der Drehzahlen der beiden Reibelemente 48a, 48b variiert werden.

An den Antriebsachsen 46a, 46b können Rotationssensoren 50a, 50b vorgesehen sein, die es ermöglichen, die Drehung der jeweiligen Antriebsachse 46a, 46b und der auf den Antriebsachsen 46a, 46b aufgebrachten Reibelemente 48a, 48b zu detektieren, um die beiden Antriebsmotoren 44a, 44b entsprechend ansteuern zu können.

Das in der Figur 5 gezeigte Ausführungsbeispiel eines Antriebsmechanismus 30 zum Antreiben eines kugelförmigen Rollelements 14 ist nur beispielhaft gezeigt. Anstelle des in der Figur 5 gezeigte Antriebsmechanismus 30 können auch andere Rollelemente 14 und Antriebsmechanismen 30 zum Einsatz kommen. Beispielsweise können als Rollelemente 14 schwenkbare Räder und/oder Rollen vorgesehen sei, die mit entsprechenden Antriebsmechanismus 30 verbunden sind.

Der Einsatz erfindungsgemäßer automatisierten Rangierheber 10 ermöglicht es, den menschlichen Aufwand beim Verbringen von Kraftfahrzeugen 4 zu reduzieren. Automatisierte Rangierheber 10 ermöglichen einen automatisierten Ablauf der Serviceerbringung an einem Kraftfahrzeug. Die hohe Flexibilität der räumlichen Beweglichkeit des Kraftfahrzeugs beim Einsatz erfindungsgemäßer Rangierheber erlaubt ein geändertes Raumkonzept, welches für das Erbringen von Services an Kraftfahrzeugen weniger Fläche benötigt und eine effizientere Anordnung der in einer Werkstatt benötigten technischen Anlagen und Maschinen ermöglicht.

Im Ergebnis kann der Service in Kraftfahrzeug-Werkstätten vereinfacht und verbessert werden.

## Patentansprüche

1. Rangierheber (10) zur Aufnahme eines Rades (6) eines Fahrzeugs, insbesondere eines Kraftfahrzeugs (4), wobei der Rangierheber (10) aufweist:
einen Grundträger (12), der Rollelemente (14) aufweist, um den Grundträger (12) beweglich auf einem Boden (8) abzustützen;
ein auf dem Grundträger (12) angeordnetes Hubelement (20), das zur Aufnahme eines Rades (6) vorgesehen ist;
wenigstens eine Hubvorrichtung (24), die dazu ausgebildet, die Höhe des Hubelements (22) gegenüber dem Grundträger (12) zu variieren; und
wenigstens eine Antriebsvorrichtung (30), die dazu ausgebildet ist, wenigstens eines der Rollelemente (14) anzutreiben, um den Rangierheber (10) auf dem Boden (8) zu bewegen, **dadurch gekennzeichnet, dass** die Rollelemente (14) Kugeln sind, und
die Antriebsvorrichtung (30) einen ersten Antriebsmechanismus (30a) aufweist, der dazu ausgebildet ist, eine Kugel (14) um eine erste Achse (A₁) zu drehen, und einen zweiten Antriebsmechanismus (30b), der dazu ausgebildet ist, eine Kugel (14) um eine zweite Achse (A₂) zu drehen.

2. Rangierheber (10) nach Anspruch 1, wobei der erste und der zweite Antriebsmechanismus (30a, 30b) jeweils ein Reibelement (34a, 34b), insbesondere eine Reibscheibe aufweist, das dazu ausgebildet ist, die Kugel (14) durch Reibung anzutreiben.

3. Rangierheber (10) nach einem der vorangehenden Patentansprüche, wobei das Hubelement (20) dazu ausgebildet ist, das Rad (6) des Kraftfahrzeugs (4) drehbar abzustützen, wobei das Hubelement (20) insbesondere Rollen (22) aufweist, um das Rad (6) des Kraftfahrzeugs (4) abzustützen.

4. Rangierheber (10) nach einem der vorangehenden Patentansprüche, wobei der Rangierheber (10) wenigstens einen Radsensor (28), beispielsweise eine Kamera, aufweist, der dazu ausgebildet ist, einen Zustand eines Rades (6) zu erfassen, das auf dem Hubelement (20) abgestützt ist.

5. Rangierheber (10) nach einem der vorangehenden Patentansprüche, wobei der Rangierheber (10) wenigstens ein Breitenausgleichselement (81) aufweist, das es ermöglicht, die Breite des Rangierhebers (10) zu verändern.

6. Rangierheber (10) nach einem der vorangehenden Patentansprüche, wobei der Rangierheber (10) eine Steuervorrichtung (32) aufweist, die dazu ausgebildet ist, die wenigstens eine Antriebsvorrichtung (30) anzusteuern, um den Rangierheber (10) auf dem Boden (8) zu bewegen.

7. Rangierheber (10) nach Patentanspruch 6, wobei die Steuervorrichtung (32) eine Navigationsvorrichtung (34) aufweist, die es ermöglicht, die Position des Rangierhebers (10) auf dem Boden (8) zu bestimmen.

8. Rangierheber (10) nach einem der vorangehenden Patentansprüche, wobei der Rangierheber (10) eine Kommunikationsvorrichtung (38) aufweist, die dazu ausgebildet ist, mit einem anderen Rangierheber (10) und/oder mit einer externen Steuerung zu kommunizieren, insbesondere drahtlos zu kommunizieren.

9. Satz von Rangierhebern (10), insbesondere von vier Rangierhebern (10), wobei jeder der Rangierheber (10) ein Rangierheber (10) nach Anspruch 8 ist, und wobei die Rangierheber (10) dazu ausgebildet sind, miteinander zu kommunizieren.

10. Nutzungsbereich (2) mit einem Boden (8), einer Kommunikationsvorrichtung (39), und einem Rangierheber nach Anspruch 8, wobei die Kommunikationsvorrichtung (39) dazu ausgebildet ist, mit dem wenigstens einem Rangierheber (10) zu kommunizieren; wobei der Nutzungsbereich (2) insbesondere Positionssensoren (52) aufweist, die es ermöglicht, die Position des wenigstens einen Rangierhebers (10) zu bestimmen.

11. Verfahren zum Transportieren eines Kraftfahrzeugs (4) mit einem Satz von Rangierhebern (10) nach Anspruch 8, wobei das Verfahren umfasst, die Rangierheber (10) so anzusteuern, dass jeder der Rangierheber (10) zu einem Rad (6) des Kraftfahrzeugs (4) fährt, das Rad (6) des Kraftfahrzeugs (4) aufnimmt und anhebt, und die Rangierheber (10) das angehobene Fahrzeug (4) koordiniert zu einem vorgegebenen Zielort transportieren.

## Claims

1. Trolley jack (10) for receiving a wheel (6) of a vehicle, in particular of a motor vehicle (4), the trolley jack (10) having:
a base carrier (12) which has rolling elements (14) for movably supporting the base carrier (12) on a floor (8);
a lifting element (20) which is arranged on the base carrier (12) and is intended for receiving a wheel (6);
at least one lifting device (24) which is configured to vary the height of the lifting element (22) in relation to the base carrier (12); and
at least one drive device (30) which is configured to drive at least one of the rolling elements (14) in order to move the trolley jack (10) on the floor (8), **characterized in that** the rolling elements (14) are balls, and
the drive device (30) has a first drive mechanism (30a), which is configured to rotate a ball (14) about a first axis (A₁), and a second drive mechanism (30b), which is configured to rotate a ball (14) about a second axis (A₂).

2. Trolley jack (10) according to Claim 1, wherein the first and second drive mechanisms (30a, 30b) each have a friction element (34a, 34b), in particular a friction disc, which is configured to drive the ball (14) by friction.

3. Trolley jack (10) according to either of the preceding patent claims, wherein the lifting element (20) is configured to rotatably support the wheel (6) of the motor vehicle (4), wherein the lifting element (20) has in particular rollers (22) for supporting the wheel (6) of the motor vehicle (4).

4. Trolley jack (10) according to one of the preceding patent claims, wherein the trolley jack (10) has at least one wheel sensor (28), for example a camera, which is configured to detect a state of a wheel (6) that is supported on the lifting element (20).

5. Trolley jack (10) according to one of the preceding patent claims, wherein the trolley jack (10) has at least one width-compensation element (81) which makes it possible to change the width of the trolley jack (10).

6. Trolley jack (10) according to one of the preceding patent claims, wherein the trolley jack (10) has a control device (32) which is configured to control the at least one drive device (30) in order to move the trolley jack (10) on the floor (8).

7. Trolley jack (10) according to Patent Claim 6, wherein the control device (32) has a navigation device (34) which makes it possible to determine the position of the trolley jack (10) on the floor (8).

8. Trolley jack (10) according to one of the preceding patent claims, wherein the trolley jack (10) has a communication device (38) which is configured to communicate, in particular to communicate wirelessly, with another trolley jack (10) and/or with an external controller.

9. Set of trolley jacks (10), in particular of four trolley jacks (10), wherein each of the trolley jacks (10) is a trolley jack (10) according to Claim 8, and wherein the trolley jacks (10) are configured to communicate with one another.

10. Area of use (2) having a floor (8), having a communication device (39), and having a trolley jack according to Claim 8, wherein the communication device (39) is configured to communicate with the at least one trolley jack (10); wherein the area of use (2) has in particular position sensors (52) which make it possible to determine the position of the at least one trolley jack (10).

11. Method for transporting a motor vehicle (4) using a set of trolley jacks (10) according to Claim 8, wherein the method comprises controlling the trolley jacks (10) in such a way that each of the trolley jacks (10) travels to a wheel (6) of the motor vehicle (4) and receives and lifts the wheel (6) of the motor vehicle (4), and the trolley jacks (10) transport the raised vehicle (4) in a coordinated manner to a predefined destination.

## Revendications

1. Cric de manutention (10) destiné à recevoir une roue (6) d'un véhicule, en particulier d'un véhicule automobile (4), le cric de manutention (10) comprenant :
un support de base (12) comportant des éléments de roulement (14) pour supporter le support de base (12) de manière mobile sur un sol (8) ;
un élément de levage (20) disposé sur le support de base (12), prévu pour recevoir une roue (6) ;
au moins un dispositif de levage (24) conçu pour faire varier la hauteur de l'élément de levage (22) par rapport au support de base (12) ; et
au moins un dispositif d'entraînement (30) conçu pour entraîner au moins l'un des éléments de roulement (14) afin de déplacer le cric de manutention (10) sur le sol (8), **caractérisé en ce que** les éléments de roulement (14) sont des billes, et
le dispositif d'entraînement (30) comporte un premier mécanisme d'entraînement (30a) conçu pour faire tourner une bille (14) autour d'un premier axe (A₁), et un deuxième mécanisme d'entraînement (30b) conçu pour faire tourner une bille (14) autour d'un deuxième axe (A₂).

2. Cric de manutention (10) selon la revendication 1, dans lequel les premier et deuxième mécanismes d'entraînement (30a, 30b) comportent chacun un élément de friction (34a, 34b), en particulier un disque de friction, conçu pour entraîner la bille (14) par friction.

3. Cric de manutention (10) selon l'une des revendications précédentes, dans lequel l'élément de levage (20) est conçu pour supporter de manière rotative la roue (6) du véhicule automobile (4), l'élément de levage (20) comportant en particulier des rouleaux (22) pour supporter la roue (6) du véhicule automobile (4).

4. Cric de manutention (10) selon l'une des revendications précédentes, dans lequel le cric de manutention (10) comporte au moins un capteur de roue (28), par exemple une caméra, conçu pour détecter un état d'une roue (6) supportée sur l'élément de levage (20).

5. Cric de manutention (10) selon l'une des revendications précédentes, dans lequel le cric de manutention (10) comporte au moins un élément de compensation de largeur (81) permettant de modifier la largeur du cric de manutention (10).

6. Cric de manutention (10) selon l'une des revendications précédentes, dans lequel le cric de manutention (10) comporte un dispositif de commande (32) conçu pour commander l'au moins un dispositif d'entraînement (30) afin de déplacer le cric de manutention (10) sur le sol (8).

7. Cric de manutention (10) selon la revendication 6, dans lequel le dispositif de commande (32) comporte un dispositif de navigation (34) permettant de déterminer la position du cric de manutention (10) sur le sol (8).

8. Cric de manutention (10) selon l'une des revendications précédentes, dans lequel le cric de manutention (10) comporte un dispositif de communication (38) conçu pour communiquer avec un autre cric de manutention (10) et/ou avec une commande externe, en particulier pour communiquer sans fil.

9. Ensemble de crics de manutention (10), en particulier de quatre crics de manutention (10), dans lequel chacun des crics de manutention (10) est un cric de manutention (10) selon la revendication 8, et dans lequel les crics de manutention (10) sont conçus pour communiquer entre eux.

10. Zone d'utilisation (2) comprenant un sol (8), un dispositif de communication (39) et un cric de manutention selon la revendication 8, dans laquelle le dispositif de communication (39) est conçu pour communiquer avec l'au moins un cric de manutention (10) ; la zone d'utilisation (2) comportant en particulier des capteurs de position (52) permettant de déterminer la position de l'au moins un cric de manutention (10).

11. Procédé de transport d'un véhicule automobile (4) au moyen d'un ensemble de crics de manutention (10) selon la revendication 8, le procédé comprenant la commande des crics de manutention (10) de telle sorte que chacun des crics de manutention (10) se déplace jusqu'à une roue (6) du véhicule automobile (4), reçoive et soulève la roue (6) du véhicule automobile (4), et que les crics de manutention (10) transportent de manière coordonnée le véhicule (4) soulevé jusqu'à une destination prédéfinie.
